# EUROPEAN PATENT APPLICATION

(11) **EP 3 932 959 A1**
(43) Date of publication of application: **05.01.2022**
(21) Application number: 20763649.9
(22) Date of filing: 14.02.2020
(51) Int. Cl.: C08F 214/18, C08F 218/08, C09K 3/18, C08F 2/22

(54) **FLUORINE-CONTAINING COPOLYMER, METHOD FOR PRODUCING SAME, WATER REPELLENT OIL REPELLENT AGENT COMPOSITION, AND ARTICLE**

(30) Priority: 26.02.2019 JP 2019033222
(71) Applicant: AGC INC., Chiyoda-ku, Tokyo 1008405 (JP)
(72) Inventor: HARA Hiroyuki, Tokyo 100-8405 (JP); TAKEMURA Motohiro, Tokyo 100-8405 (JP); TOMIZUKA Yujiro, Tokyo 100-8405 (JP)
(74) Representative: Müller-Boré & Partner Patentanwälte PartG mbB
(86) International application number: PCT/JP2020/005883
(87) International publication number: WO 2020/175197

(57) **Abstract**

To provide a fluorinated copolymer capable of obtaining an article excellent in water and oil repellency, and friction durability of water and oil repellency. A fluorinated copolymer having units based on the following monomer a and units based on the following monomer b, wherein the proportion of the units based on the monomer a is from 20 to 50 mol% based on the total number of moles of units constituting the fluorinated copolymer, the mass average molecular weight is from 20,000 to 100,000, and the ratio of the half-width W₁ of the peak of the fluorinated copolymer to the peak width W₂ in a chromatogram obtainable by high performance liquid chromatography measurement is from 0.35 to 0.55:
Monomer a: a compound represented by CH₂=CH-R^{f} (R^{f}: a C₁₋₈ perfluoroalkyl group;
Monomer b: a monomer copolymerizable with the monomer a.

## Description

### TECHNICAL FIELD

The present invention relates to a fluorinated copolymer, a method for producing it, a water and oil repellent composition, and an article.

### BACKGROUND ART

As a method of imparting water and oil repellency to an article (a resin surface, a fiber product, a porous substrate, etc.), a method of treating the article by using a water and oil repellent composition in which a fluorinated copolymer having units based on a (meth)acrylate having a perfluoroalkyl group is dispersed in an aqueous medium, is known. Further, in recent years, a fluorinated polymer having units based on a (meth)acrylate having a C₆ perfluoroalkyl group, has been used as an environmentally friendly type. However, the ester bonds in the units based on a (meth)acrylate are likely to be easily cleaved by hydrolysis by alkali, etc. or photolysis by ultraviolet rays. Therefore, the perfluoroalkyl groups may be lost from the fluorinated copolymer, whereby the water and oil repellency of the article may decrease.

As a fluorinated copolymer which is environmentally friendly and of which the water and oil repellency is less likely to be decreased due to hydrolysis by alkali, etc. and photolysis by ultraviolet rays, a fluorinated copolymer which does not have units based on a (meth)acrylate having a perfluoroalkyl group, is known. As a water and oil repellent composition containing a fluorinated copolymer having no units based on a (meth)acrylate having a perfluoroalkyl group, a water and oil repellent composition containing a fluorinated copolymer having units based on a (perfluoroalkyl)ethylene has been proposed (Patent Documents 1 and 2).

### PRIOR ART DOCUMENTS

### PATENT DOCUMENTS

Patent Document 1: JP-A-H01-26601
Patent Document 2: Japanese Patent No. 3517977

### DISCLOSURE OF INVENTION

### TECHNICAL PROBLEM

In Patent Document 1, a water and oil repellent composition is disclosed in which a fluorinated copolymer is dissolved in an organic solvent (left column on page 9 of Patent Document 1). In a case where an article is treated by using this water and oil repellent composition, an organic solvent is likely to volatilize, and its influence on the environment is worried.

Further, the fluorinated copolymer disclosed in Patent Document 1 is made to have a relatively low molecular weight in order to make it easily soluble in an organic solvent (left column on page 2 of Patent Document 1). Further, the fluorinated copolymer disclosed in Patent Documents 1 and 2 is produced by bulk polymerization, whereby a polymer having a relatively low molecular weight is obtained (Examples of Patent Documents 1 and 2). An article treated with a water and oil repellent composition containing a fluorinated copolymer having a relatively low molecular weight is likely to have insufficient friction durability of the water and oil repellency. For example, when rubbing between articles treated with the water and oil repellent composition, or rubbing between an article treated with the water and oil repellent composition and another article continues, the water and oil repellency is likely to decrease.

The present invention is to provide a fluorinated copolymer capable of obtaining an article excellent in water and oil repellency, and friction durability of the water and oil repellency, a method for producing it, a water and oil repellent composition capable of obtaining an article excellent in water and oil repellency, and friction durability of the water and oil repellency, and an article excellent in water and oil repellency, and friction durability of the water and oil repellency.

### SOLUTION TO PROBLEM

The present invention has the following embodiments.
<1> A fluorinated copolymer comprising units based on the following monomer a and units based on the following monomer b, wherein
   the proportion of the units based on the monomer a is from 20 to 50 mol% based on the total number of moles of units constituting the fluorinated copolymer,
   the mass average molecular weight is from 20,000 to 100,000, and
   the ratio of the half width of the peak of the fluorinated copolymer to the peak width in a chromatogram obtainable by high performance liquid chromatography measurement is from 0.35 to 0.55:
      Monomer a: a compound represented by the following formula 1,

         CH₂=CH-R^{f} Formula 1

         where R^{f} is a C₁₋₈ perfluoroalkyl group;
      Monomer b: a monomer copolymerizable with the monomer a.
<2> The fluorinated copolymer according to <1>, wherein R^{f} in the monomer a is a C₄₋₆ perfluoroalkyl group.
<3> The fluorinated copolymer according to <1> or <2>, wherein the monomer a is CH₂=CH-CF₂CF₂CF₂CF₃ or CH₂=CH-CF₂CF₂CF₂CF₂CF₂CF₃.
<4> The fluorinated copolymer according to any one of <1> to <3>, wherein the proportion of the units based on the monomer b is from 50 to 80 mol% based on the total number of moles of units constituting the fluorinated copolymer.
<5> The fluorinated copolymer according to any one of <1> to <4>, wherein the units based on the monomer b include units based on the following monomer b1:
   Monomer b1: a compound represented by the following formula 2:

   CH₂=CH-O-C(=O)-R Formula 2

   where R is a C₁₋₄ alkyl group.
<6> The fluorinated copolymer according to <5>, wherein R in the monomer b1 is a methyl group.
<7> The fluorinated copolymer according to any one of <1> to <6>, wherein the molecular weight distribution (Mw/Mn) is from 1.0 to 4.5.
<8> A method for producing a fluorinated copolymer, which comprises emulsifying a first monomer component containing the following monomer a and the following monomer b, and a first mixed liquid containing an aqueous medium and an emulsifier, to obtain an emulsified liquid, adding to the emulsified liquid, a second monomer component containing the monomer a, and a polymerization initiator, to obtain a second mixed liquid, and polymerizing in the second mixed liquid, the first monomer component and the second monomer component, wherein
   the proportion of the monomer a contained in the first monomer component is from 30 to 70 mass% based on the total of the monomer a contained in the first monomer component and the monomer a contained in the second monomer component:
   Monomer a: a compound represented by the following formula 1,

      CH₂=CH-R^{f} Formula 1

      where R^{f} is a C₁₋₈ perfluoroalkyl group;
   Monomer b: a monomer copolymerizable with the monomer a, other than the monomer a.
<9> The method for producing a fluorinated copolymer according to <8>, wherein the proportion of the monomer components in the second mixed liquid (the total content of the first monomer component and the second monomer component) is from 10 to 70 mass%.
<10> The method for producing a fluorinated copolymer according to <8> or <9>, wherein the first mixed liquid is subjected to shearing or emulsified under high pressure conditions.
<11> The method for producing a fluorinated copolymer according to any one of <8> to <10>, wherein the fluorinated copolymer is the fluorinated copolymer as defined in any one of <1> to <7>.
<12> A method for producing a fluorinated copolymer as defined in any one of <1> to <7>, which comprises polymerizing, in an emulsified liquid containing a monomer component composed of the monomer a and the monomer b, an aqueous medium, an emulsifier and a polymerization initiator, the monomer component, to obtain a fluorinated copolymer dispersion, recovering the fluorinated copolymer from the fluorinated copolymer dispersion, and washing the fluorinated copolymer with water or a polar solvent.
<13> A water and oil repellent composition containing the fluorinated copolymer as defined in any one of <1> to <7>.
<14> An article treated by using the water and oil repellent composition as defined in <13>.
<15> The article according to <14>, wherein the contact angle of water at the surface of the article after a friction test is more than 100 degrees.

### ADVANTAGEOUS EFFECTS OF INVENTION

According to the fluorinated copolymer of the present invention, it is possible to obtain an article excellent in water and oil repellency, and friction durability of the water and oil repellency.

According to the method for producing a fluorinated copolymer of the present invention, it is possible to produce a fluorinated copolymer capable of obtaining an article excellent in water and oil repellency, and friction durability of the water and oil repellency.

According to the water and oil repellent composition of the present invention, it is possible to obtain an article excellent in water and oil repellency, and friction durability of the water and oil repellency.

The article of the present invention is excellent in water and oil repellency, and friction durability of the water and oil repellency.

### BRIEF DESCRIPTION OF DRAWINGS

Fig. 1 is a diagram illustrating W₁ and W₂.
Fig. 2 is a diagram in which the chromatograms obtained by HPLC measurements in Ex. 1 and Ex. 2 are shown in a superimposed view.
Fig. 3 is a diagram in which the chromatograms obtained by HPLC measurements in Ex. 1 and Ex. 3 are shown in a superimposed view.
Fig. 4 is a diagram in which the chromatograms obtained by HPLC measurements in Ex. 1 and Ex. 4 are shown in a superimposed view.
Fig. 5 is a diagram in which the chromatograms obtained by HPLC measurements in Ex. 1 and Ex. 10 are shown in a superimposed view.

### DESCRIPTION OF EMBODIMENTS

The meanings and definitions of terms in this specification are as follows.

A "unit based on a monomer" is a generic term for an atomic group which is directly formed by polymerization of one molecule of a monomer, and an atomic group obtainable by chemically converting a portion of the atomic group. Units based on a monomer may simply be referred to as "monomeric units".

A "(meth)acrylate" is a generic term for an acrylate and a methacrylate. Similarly, a "(meth)acryloyloxy group" is a generic term for an acryloyloxy group and a methacryloyloxy group.

By taking the mass of the sample before heating as the sample mass and the mass after drying the sample in a convective dryer at 120°C for 4 hours as the solid mass, the solid concentration is calculated by the solid mass/the sample mass × 100.

The number average molecular weight (hereinafter referred to as Mn) and the mass average molecular weight (hereinafter referred to as Mw) of a fluorinated copolymer are molecular weights converted to polymethylmethacrylate obtainable by measuring by gel permeation chromatography (hereinafter referred to also as GPC measurement) by using a calibration curve prepared by using a standard polymethylmethacrylate sample. The molecular weight distributions are values calculated by applying the formula of Mw/Mn.

"The ratio (hereinafter referred to also as W₁/W₂) of the half width (hereinafter referred to also as W₁) of the peak of the fluorinated copolymer to the peak width (hereinafter referred to also as W₂) in the chromatogram obtained by high performance liquid chromatography (hereinafter referred to also as HPLC), is a value calculated by the method as described later.

"W₁" is the half width of the peak of the fluorinated copolymer in the chromatogram obtainable by HPLC measurement. The HPLC measurement shall be conducted under the measurement conditions as shown in Examples as described later.

"W₂" is the peak width of the peak of the fluorinated copolymer in the above chromatogram and is the width between the start point as described below and the end point as described below.

The "start point" is an intersection point closest to the peak start among the intersection points of a straight line parallel to the width direction of the above chromatogram and passing through a position shifted upward by 1/20 of the peak height from the peak start position of the peak of the fluorinated copolymer, and the chromatogram.

The "end point" is an intersection point closest to the peak end among the intersection points of a straight line which is parallel to the width direction of the chromatogram and passing through a position shifted upward by 1/20 of the peak height from the peak end position of the peak of the fluorinated copolymer, and the chromatogram.

The reason why the start point and the end point are shifted upward by 1/20 of the peak height h from the positions of the peak start and the peak end, respectively, is to reduce the influence by the variation of the baseline.

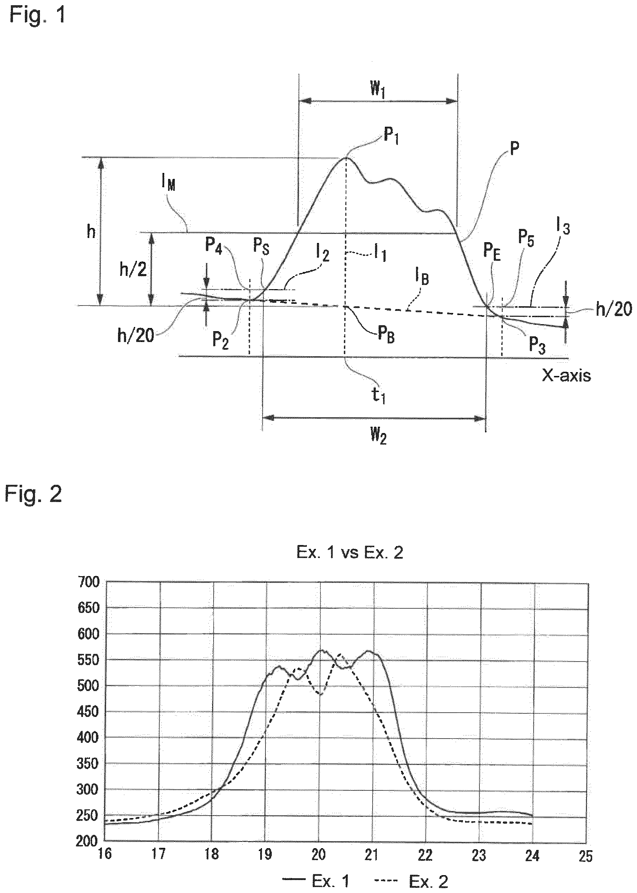

Referring to Fig. 1, the method for calculating "W₁/W₂" will be described in detail. Fig. 1 is one which schematically shows an example of the chromatogram obtainable by HPLC measurement. In Fig. 1, the horizontal direction is the X-axis, and the vertical direction is the Y-axis. The X-axis represents the retention time (minutes), and the retention time is longer on the right side in the Fig. The Y-axis represents the signal strength detected by the detector.
(1) A perpendicular I₁ is drawn from the peak top P₁ of the peak P of a fluorinated copolymer towards the X-axis. In a case where the peak P includes a plurality of peaks that are not separated, the peak top of the maximum peak is taken as the peak top P₁ of the peak P.
(2) The distance from the intersection P_{B} of the baseline I_{B} of the peak P and the perpendicular I₁ to the peak top P₁ is taken as the peak height h.
(3) A straight line I_{M} parallel to the X-axis is drawn at the midpoint of the line segment connecting the intersection P_{B} and the peak top P₁, i.e. at a position of 1/2 of the peak height h. The distance between the intersections of the straight line I_{M} and the left and right of the chromatogram, i.e. the difference between the retention times at the intersections, is taken as the half-width W₁.
(4) A straight line I₂ parallel to the X-axis is drawn which passes through the position P₄ shifted by 1/20 of the peak height h in the Y-axis direction from the position of the peak start P₂ of the peak P (the intersection of the baseline I_{B} and the chromatogram with the shorter retention time). Among intersections of the straight line I₂ and the chromatogram, the intersection closest to the peak start P₂ is taken as the starting point P_{S}.
(5) A straight line I₃ parallel to the X-axis is drawn which passes through the position P₅ shifted by 1/20 of the peak height h in the Y-axis direction from the position of the peak end P₃ of the peak P (the intersection of the baseline I_{B} and the chromatogram with the longer retention time). Among intersections of the straight line I₃ and the chromatogram, the intersection closest to the peak end P₃ is taken as the endpoint P_{E}.
(6) Two perpendicular lines perpendicular to the X-axis passing through the start point P_{S} and the end point P_{E}, respectively, and the distance between these perpendicular lines, i.e. the difference in the retention time of the start point P_{S} and the end point P_{E}, is taken as W₂.
(7) The values of W₁ and W₂ obtained as described above are fitted to the formula of W₁/W₂ to calculate "W₁/W₂".

### <Fluorinated copolymer>

The fluorinated copolymer of the present invention (hereinafter referred to also as copolymer A) has units of a monomer a represented by the following formula 1 and units of a monomer b copolymerizable with the above monomer a.

CH₂=CH-R^{f} Formula 1

where R^{f} is a C₁₋₈ perfluoroalkyl group.

The number of carbon atoms of R^{f} in the monomer a is preferably from 4 to 6, particularly preferably 6, from such a viewpoint that the emulsification state is easily adjusted at the time of producing the copolymer A, and the conversion rate to the copolymer A tends to be good, and that the water and oil repellency of the article treated with the composition containing the copolymer A (the water and oil repellent composition of the present invention as described later) is excellent. R^{f} may be linear or branched and is preferably linear.

The monomer a may, for example, be CH₂=CH-CF₃, CH₂=CH-CF₂CF₃, CH₂=CH-CF₂CF₂CF₃, CH₂=CH-CF(CF₃)₂, CH₂=CH-CF₂CF₂CF₂CF₃, CH₂=CH-CF₂CF(CF₃)₂, CH₂=CH-C(CF₃)₃, CH₂=CH-CF₂CF₂CF₂CF₂CF₃, CH₂=CH-CF₂CF₂CF(CF₃)₂, CH₂=CH-CF₂CF₂CF₂CF₂CF₂CF₃, CH₂=CH-CF₂CF₂CF₂CF₂CF₂CF(CF₃)₂, or CH₂=CH-CF₂CF₂CF₂CF₂CF₂CF₂CF₂CF₃.

As the monomer a, CH₂=CH-CF₃, CH₂=CH-CF₂CF₃, CH₂=CH-CF(CF₃)₂, CH₂=CH-CF₂CF₂CF₂CF₃ or CH₂=CH-CF₂CF₂CF₂CF₂CF₂CF₃ is preferred, CH₂=CH-CF₃, CH₂=CH-CF₂CF₃, CH₂=CH-CF₂CF₂CF₂CF₃ or CH₂=CH-CF₂CF₂CF₂CF₂CF₂CF₃ is more preferred, and CH₂=CH-CF₂CF₂CF₂CF₃ or CH₂=CH-CF₂CF₂CF₂CF₂CF₂CF₃ is further preferred. As the monomer a, two or more types may be used in combination.

As the monomer b, a compound having a vinyl group or an allyl group is preferred from such a viewpoint that it is easily copolymerizable with the monomer a.

The monomer b may be a compound having 2 or more polymerization-reactive carbon-carbon double bonds. The number of polymerization-reactive carbon-carbon double bonds in the monomer b is preferably from 1 to 3, more preferably 1 or 2, and particularly preferably 1.

As the monomer b, a monomer b1 represented by the following formula 2 is preferred from such a viewpoint that it has good copolymerizability with the monomer a, it is possible to obtain an article excellent in oil repellency and alcohol repellency, and its handling is easy.

CH₂=CH-O-C(=O)-R Formula 2

where R is a C₁₋₄ alkyl group.

In the formula 2, the number of carbon atoms of R is preferably 1 or 2 from such a viewpoint that conversion to the copolymer A is easy, and the water and oil repellency of an article treated with a composition containing the copolymer A will be excellent, and particularly preferably 1 from such a viewpoint that it is possible to obtain an article excellent in oil repellency and alcohol repellency. That is, R is particularly preferably a methyl group. R may be linear or branched, and is preferably linear.

As the monomer b1, there is no particular limitation as long as it can be copolymerized with the monomer a, but a C₁₋₇ carboxylic acid vinyl ester is preferred, and, for example, vinyl acetate, vinyl propionate, vinyl butyrate, vinyl pivalate, vinyl monochloroacetate, vinyl methacrylate, or vinyl crotonate may be mentioned. As the monomer b1, vinyl acetate is particularly preferred from such a viewpoint that it is possible to obtain an article excellent in oil repellency and alcohol repellency.

As the monomer b, a monomer b1 and another monomer b (hereinafter referred to also as monomer b2) may be used in combination.

The monomer b2 may be a carboxylic acid vinyl ester having 8 or more carbon atoms, an allyl ester of a carboxylic acid, a vinyl ether, an allyl ether, a vinyl halide, an olefin, a (meth)acrylate, a (meth)acrylamide, a halogenated olefin other than vinyl halide, etc., but is not limited thereto.

The carboxylic acid vinyl ester having 8 or more carbon atoms may, for example, be vinyl caproate, vinyl caprylate, vinyl caprate, vinyl laurate, vinyl myristate, vinyl palmitate, vinyl stearate, vinyl octylate, divinyl adipate, or vinyl cinnamate.

The allyl ester of a carboxylic acid may, for example, be allyl acetate or diallyl adipate.

The vinyl ether may, for example, be methyl vinyl ether, ethyl vinyl ether, n-butyl vinyl ether, iso-butyl vinyl ether, tert-butyl vinyl ether, 4-hydroxybutyl vinyl ether, stearyl vinyl ether, chloromethyl vinyl ether, 2-chloroethyl vinyl ether, chloropropyl vinyl ether, cyclohexyl vinyl ether, ethylene glycol monovinyl ether, or diethylene glycol monovinyl ether.

The allyl ether may, for example, be allyl ethyl ether, diallyl ether, 1,3-diallyloxy-2-propanol, or ethylene glycol monoallyl ether.

The vinyl halide may, for example, be vinyl chloride or vinyl fluoride.

The olefin may be ethylene or propylene.

The (meth)acrylate may, for example, be an alkyl (meth)acrylate, a hydroxyalkyl (meth)acrylate, an aromatic (meth)acrylate, an aliphatic cyclic (meth)acrylate, or a (meth)acrylic acid.

The (meth)acrylamide may, for example, be an alkyl (meth)acrylamide or a hydroxyalkyl (meth)acrylamide.

The halogenated olefin other than vinyl halide may, for example, be vinylidene chloride, vinylidene fluoride, tetrafluoroethylene, trifluorochloroethylene, CF₂=CFOCF₃, CF₂=CFOCF₂CF₃, CF₂=CFOCF₂CF₂CF₃, CF₂=CFOCF₂CF₂CF₂CF₃, or CF₂=CFOCF₂CF(CF₃)OCF₂CF₂CF₃.

Other examples of the monomer b2 may be N-vinylpyrrolidone, N-vinyl-ε-caprolactam and ethylvinyl sulfide, but are not limited thereto.

The proportion of the monomer a units is from 20 to 50 mol%, preferably from 30 to 45 mol%, based on the total number of moles of units constituting the copolymer A (i.e. the total number of moles of the monomer a units and the monomer b units). When the proportion of the monomer a units is at least the lower limit value in the above range, the conversion rate of the monomer component to the copolymer A can be improved at the time of polymerization of the monomer component, and the molecular weight of the copolymer A can be increased, and the water and oil repellency of the article treated with the composition containing the copolymer A will be excellent. When the proportion of the monomer a units is at most the upper limit value in the above range, the conversion rate of the monomer component to the copolymer A can be improved during polymerization of the monomer component, and the molecular weight of the copolymer A can be increased. Further, the copolymer A will be excellent in water dispersibility.

The proportion of the monomer b units is from 50 to 80 mol%, preferably 55 to 70 mol%, based on the total number of moles of units constituting the copolymer A. When the proportion of the monomer b units is at least the lower limit value in the above range, the molecular weight of the copolymer A can be made to be high. Further, the copolymer A will be excellent in water dispersibility. When the proportion of the monomer b units is at most the upper limit value in the above range, the water and oil repellency of the article treated with the composition containing the copolymer A will be excellent.

The proportion of the monomer b1 units is preferably from 50 to 80 mol%, more preferably from 55 to 70 mol%, based on the total number of moles of units constituting the copolymer A. When the proportion of the units based on the monomer b1 is at least the lower limit value in the above range, it is possible to obtain an article excellent in oil repellency and alcohol repellency. When the proportion of the monomer b1 units is at most the upper limit value in the above range, the water and oil repellency of the article treated with the composition containing the copolymer A will be excellent.

The proportion of the monomer b2 units is preferably less than 30 mass%, more preferably less than 20 mass% by mass, and may be 0 mass%, based on the total mass of units constituting the copolymer A. Within the above range, it is possible to improve the conversion rate of the monomer component to the copolymer A during polymerization of the monomer component, and to make the molecular weight of the copolymer A to be high, and the water and oil repellency of the article treated with the composition containing the copolymer A will be excellent.

The proportion of the total of the monomer a units and the monomer b1 units is preferably at least 70 mass%, more preferably at least 80 mass%, and may be 100 mass%, based on the total of units constituting the copolymer A. Within the above range, it is possible to improve the conversion rate of the monomer component to the copolymer A during polymerization of the monomer component, and to make the molecular weight of the copolymer A to be high, and the water and oil repellency of the article treated with the composition containing the copolymer A will be excellent.

The proportions of the respective monomer units can be calculated by ¹H-NMR. Since almost no monomer remaining after polymerization of the monomer component is detected in the method for producing a fluorinated copolymer as described later, they may be calculated based on the charged amounts of the monomers in the method for producing the fluorinated copolymer.

Mw of the copolymer A is at least 20,000, preferably at least 21,000, more preferably at least 23,000. Mw of the copolymer A is at most 100,000, preferably at most 80,000, more preferably at most 70,000. When Mw of the copolymer A is at least the lower limit value in the above range, the friction durability of the water and oil repellency of an article treated with the composition containing the copolymer A will be excellent. When Mw of the copolymer A is at most the upper limit value in the above range, the water dispersibility of the copolymer A will be excellent.

Mn of the copolymer A is preferably at least 5,000, more preferably at least 10,000, further preferably at least 15,000. Mn of the copolymer A is preferably at most 100,000, more preferably at most 70,000, further preferably at most 60,000. When Mn of the copolymer A is at least the lower limit value in the above range, the friction durability of the water and oil repellency of an article treated with the composition containing the copolymer A will be further excellent. When Mn of the copolymer A is at most the upper limit value in the above range, the water dispersibility of the copolymer A will be further excellent.

The molecular weight distribution (Mw/Mn) of the copolymer A is preferably at least 1.0, more preferably at least 1.2, further preferably at least 1.4, most preferably more than 1.8. The molecular weight distribution (Mw/Mn) of the copolymer A is preferably at most 4.5, more preferably at most 3.5, further preferably at most 2.5. When Mw/Mn of the copolymer A is at least the lower limit value in the above range, the friction durability of the water and oil repellency of an article treated with the composition containing the copolymer A will be excellent. When Mw/Mn of the copolymer A is at most the upper limit value in the above range, the water dispersibility of the copolymer A will be excellent.

It is preferred that the copolymer A does not contain a copolymer A having a molecular weight of at most 1,000, or if contains, its proportion is at most 1% as the proportion (%) of the peak area of a portion having a molecular weight of at most 1,000 to the peak area of the entire copolymer A in a chart obtainable by measuring the molecular weight distribution of the copolymer A by GPC measurement. It is more preferred that the copolymer A does not contain a copolymer A having a molecular weight of at most 1,000.

When the copolymer A does not contain a copolymer A having a molecular weight of at most 1000, or if contains, its proportion is within the above range, the water and oil repellency of an article treated with the composition containing the copolymer A will be further excellent.

Of the copolymer A, "W₁/W₂" is from 0.35 to 0.55, preferably from 0.40 to 0.50. When W₁/W₂ is at least the lower limit value in the above range, it is possible to improve the conversion rate of the monomer component to the copolymer A during polymerization of the monomer component, and to make the molecular weight of the copolymer A to be high. When W₁/W₂ is at most the upper limit value in the above ranges, it is possible to improve the conversion rate of the monomer component to the copolymer A during polymerization of the monomer component, and to make the molecular weight of the copolymer A to be high. Further, the water and oil repellency of an article treated with the composition containing the copolymer A will be excellent.

W₁/W₂ shows the uniformity of the composition distribution of the fluorinated copolymer, and It is considered that the smaller W₁/W₂, the higher the uniformity of the composition distribution of the fluorinated copolymer.

Heretofore, it is considered that a fluorinated copolymer produced by bulk polymerization has become uneven in composition distribution due to a non-uniform polymerization field of bulk polymerization. It is considered that, due to this reason, the water and oil repellency of an article treated with the composition containing the fluorinated copolymer has become insufficient.

The copolymer A is superior in uniformity in composition distribution to a conventional one. Specifically, it is considered that there is little difference in the proportion of the monomer a units in the molecule, the distribution state of the monomer a units in the molecule, and the polarity among molecules caused by the difference in them.

W₁/W₂ can be adjusted, for example, by polymerizing conditions in producing a fluorinated copolymer. For example, as in the production method 1 described later, a method of performing emulsion polymerization by adding a portion of the monomer a after emulsification and liquefaction may be mentioned. When a portion of the monomer a is added to the emulsion after the addition, W₁/W₂ can also be adjusted by the proportion of the monomer a to be added after the addition.

W₁/W₂ can also be adjusted, for example, by purifying the fluorinated copolymer obtained by polymerization. The purification method may, for example, be a method in which a fluorinated copolymer is washed with water and a polar solvent as in production method 2 described later.

Two or more of the above methods may be combined to adjust W₁/W₂.

In the copolymer A as described above, since it has monomer a units, the water and oil repellency of an article treated with the composition containing the copolymer A will be excellent.

Then, in the copolymer A, since the proportion of the monomer a units to all units constituting the copolymer A is within a specific range, the water and oil repellency of an article treated with the composition containing the copolymer A and the water dispersibility of the copolymer A, will be excellent. Further, since W₁/W₂ is within a specific range, the water and oil repellency of an article treated with the composition containing the copolymer A will be further excellent. Further, since Mw is high, the friction durability of the water and oil repellency of an article treated with the composition containing the copolymer A will also be excellent.

### <Method for producing the fluorinated copolymer>

As the polymerization methods for obtaining the copolymer A of the present invention, an emulsion polymerization method, a solution polymerization method, a suspension polymerization method, a bulk polymerization method, etc. may be mentioned. Among them, an emulsion polymerization method is preferred. By polymerizing the monomer component by an emulsion polymerization method, without using a solvent other than an aqueous medium, it is possible to improve the conversion rate of the monomer component to the copolymer A and to make Mw of the copolymer A to be high.

In the emulsion polymerization method, for example, a monomer component is polymerized in an emulsion solution containing a monomer component, an aqueous medium, an emulsifier, and a polymerization initiator.

In a case where the polymerization method is an emulsion polymerization method, as a method to bring W₁/W₂ to be within the above-mentioned range, for example, the following method 1 or method 2 may be mentioned. Either one of these methods may be used alone, or two or more of them may be used in combination. In a case where W₁/W₂ of the fluorinated copolymer produced by polymerization differs from the target value, W₁/W₂ of the fluorinated copolymer may be adjusted after polymerization.
Method 1: A method in which a first mixed liquid containing a first monomer component consisting of a monomer a and a monomer b, an aqueous medium and an emulsifier, is emulsified to obtain an emulsified liquid, a second monomer component containing a monomer a, and a polymerization initiator, are added to the emulsified liquid to obtain a second mixed liquid, and the first monomer component and the second monomer component are polymerized (emulsion polymerization) in the second mixed liquid.
Method 2: A method in which a monomer component is polymerized (emulsion polymerization) in an emulsified liquid containing a monomer component consisting of a monomer a and a monomer b, an aqueous medium, an emulsifier, and a polymerization initiator, to obtain a fluorinated copolymer dispersion, the fluorinated copolymer is recovered from the fluorinated copolymer dispersion, and the fluorinated copolymer is washed with water and a polar solvent.

Hereinafter, the method for producing the copolymer A will be described in detail with reference to a production method by the method 1 (hereinafter referred to also as a production method 1) and a production method by the method 2 (hereinafter referred to also as a production method 2) as examples.

### (Production method 1)

In the production method 1, as in the method 1, W₁/W₂ can be made to be within the above-mentioned range by dividedly charging the monomer a before and after the emulsifying process step. Further, it is possible to improve the conversion rate of the monomer component to the copolymer A at the time of polymerization of the monomer component and to make the molecular weight of the copolymer A to be high.

The second monomer component may or may not contain a monomer b.

The proportion of the monomer a to the total number of moles of the monomer component is from 20 to 50 mol%, preferably from 30 to 45 mol%. When the proportion of the monomer a is at least the lower limit value in the above range, it is possible to improve the conversion rate of the monomer component to the copolymer A at the time of polymerization of the monomer component, and to make the molecular weight of the copolymer A to be high, and the water and oil repellency of an article treated with the composition containing the copolymer A will be excellent. When the proportion of the monomer a is at most the upper limit value in the above range, it is possible to improve the conversion rate of the monomer component to the copolymer A at the time of polymerization of the monomer component, and to make the molecular weight of the copolymer A to be high. Further, the copolymer A will be excellent in water dispersibility.

In the production method 1, the sum of the number of moles of the first monomer component and the number of moles of the second monomer component is the total number of moles of the monomer component.

The proportion of the monomer b1 to the total number of moles of the monomer component is preferably from 50 to 80 mol%, more preferably from 55 to 70 mol%. When the proportion of the monomer b1 is at least the lower limit value in the above range, it is possible to obtain an article excellent in oil repellency and alcohol repellency. When the proportion of the monomer b1 is at most the upper limit value in the above range, the water and oil repellency of an article treated with the composition containing the copolymer A will be excellent.

The proportion of the monomer b2 to the total mass of the monomer component is preferably less than 30 mass%, more preferably less than 20 mass%, and may be 0 mass%. Within the above range, it is possible to improve the conversion ratio of the monomer component to the copolymer A during polymerization of the monomer component, and to make the molecular weight of the copolymer A to be high, and the water and oil repellency of an article treated with the composition containing the copolymer A will be excellent.

The proportion of the total of the monomer a and the monomer b1 to the total mass of the monomer component is preferably at least 70 mass%, more preferably at least 80 mass%, and may be 100 mass%. Within the above range, it is possible to improve the conversion ratio of the monomer component to the copolymer A during polymerization of the monomer component, and to make the molecular weight of the copolymer A to be high, and the water and oil repellency of an article treated with the composition containing the copolymer A will be excellent.

The proportion of the monomer a contained in the first monomer component is preferably from 30 to 70 mass%, more preferably from 40 to 68 mass%, based on the total mass of the mass of the monomer a contained in the first monomer component and the mass of the monomer a contained in the second monomer component (the total mass of the monomer a contained in the second mixture). Within the above range, W₁/W₂ is likely to be within the above range. Further, it is possible to further improve the conversion rate of the monomer component to the copolymer A at the time of polymerization of the monomer component and to make the molecular weight of the copolymer A to be higher.

As the aqueous medium, the same one as the aqueous medium in the water and oil repellent composition as described later may be mentioned. Further, as the emulsifier, the same one as the emulsifier in the water and oil repellent composition as described later may be mentioned.

The polymerization initiator may, for example, be a thermal polymerization initiator, a photo-polymerization initiator, a radiation polymerization initiator, a radical polymerization initiator, or an ionic polymerization initiator, and a radical polymerization initiator is preferred. As the radical polymerization initiator, for example, an azo-type polymerization initiator, a peroxide-type polymerization initiator, or a redox-type initiator is used depending on the polymerization temperature. As the radical polymerization initiator, an azo-type compound is preferred, and a salt of an azo-type compound is more preferred. The polymerization temperature is preferably from 20 to 150°C, more preferably from 35 to 90°C.

The amount of the polymerization initiator to be added is preferably from 0.1 to 5 parts by mass, more preferably from 0.1 to 3 parts by mass, per 100 parts by mass of the monomer component.

At the time of polymerizing the monomer component, a molecular weight adjusting agent may be used. As the molecular weight adjusting agent, for example, an aromatic compound, a mercapto alcohol, a mercapto carboxylic acid, or an alkyl mercaptan is preferred, and a mercapto carboxylic acid or an alkyl mercaptan is more preferred. The molecular weight adjusting agent may, for example, be mercaptoethanol, mercaptopropionic acid, n-octylmercaptan, n-dodecylmercaptan, tert-dodecylmercaptan, stearylmercaptan, or α-methylstyrene dimer (CH₂=C(Ph)CH₂C(CH₃)₂Ph, where Ph is a phenyl group).

The amount of the molecular weight adjusting agent to be added is preferably from 0 to 5 parts by mass, more preferably from 0 to 2 parts by mass, per 100 parts by mass of the monomer component.

The first mixed liquid can be prepared by mixing a first monomer component, an aqueous medium, and an emulsifier. There is no particular limitation on the mixing method.

As an emulsification method of the first mixed liquid, from such a viewpoint that an emulsified liquid can be uniformly dispersed, an emulsifying method by applying shear by using a homogenizer or the like, or an emulsifying method under a high pressure condition by using a high pressure emulsifier, is preferred.

Conditions for applying shear may, for example, be such conditions that by using a homogenizer, treatment is carried out at from 5,000 to 30,000 revolutions per minute for from 1 to 20 minutes.

Conditions for emulsifying under high pressure conditions may, for example, be such conditions that by using a high pressure emulsifier, circulating treatment is carried from 1 to 3 times under from 5 to 50 MPa.

The temperature at which the first mixed liquid is emulsified is, for example, from 10 to 60°C.

The proportion of the monomer component in the second mixed liquid (the total content of the first monomer component and the second monomer component) is preferably from 10 to 70 mass%, more preferably from 20 to 60 mass%. When the concentration of the monomer component in the second mixed liquid is within the above range, it is possible to improve the conversion rate of the monomer component to the copolymer A at the time of polymerization of the monomer component, and to make the molecular weight of the copolymer A to be sufficiently high.

The total amount of the emulsifier in the second mixed liquid is preferably from 1 to 6 parts by mass, to 100 parts by mass of the monomer component. When the total amount of the emulsifier is at least the lower limit value in the above range, the dispersion stability of the second mixed liquid will be excellent. When the total amount of the emulsifier is at most the upper limit value in the above range, there will be little adverse effect on the water and oil repellency of an article treated with the composition containing the copolymer A.

In order to polymerize the monomer component in the second mixed liquid, for example, the temperature of the second mixed liquid may be raised to from 35 to 90°C. The polymerization time is, for example, from 3 to 144 hours.

The conversion rate of the monomer component to the copolymer A at the end of the polymerization is preferably at least 80%, more preferably at least 90%. By increasing the conversion rate, the molecular weight of the copolymer A will also be increased, and the water and oil repellency performance will also be good. Further, by setting the conversion rate to be high, it is possible to suppress deterioration in performance due to the residual monomer, and since the amount of fluorine atoms contained in the copolymer A will increase, the water and oil repellency becomes good. In order to set the conversion rate to be at least 80%, it is preferred to perform optimization of e.g. the emulsification method, the emulsification liquid composition, the second mixed liquid composition, the polymerization temperature, the polymerization time, etc.

By polymerizing the monomer component in the second mixed liquid, a fluorinated copolymer dispersion containing the copolymer A will be obtained.

After the polymerization, as the case requires, the copolymer A contained in the fluorinated copolymer dispersion is recovered. The recovery method is not particularly limited, and, for example, a known method as exemplified by the production method 2 as described later may be suitably employed. The recovered fluorinated copolymer A may be washed with water and a polar solvent. The method of washing in such a case may be the same as the method of washing the fluorinated copolymer A recovered in the production method 2 as described later, with water and a polar solvent, including the respective preferred embodiments. By such washing of the fluorinated copolymer A, it is possible to reduce W₁/W₂ as well.

Here, the fluorinated copolymer dispersion may be used as it is, as a water and oil repellent composition of the present invention as described later. Otherwise, the fluorinated copolymer dispersion may be diluted with an aqueous medium to adjust the solid concentration, and, if necessary, other components may be added to form the water and oil repellent composition of the present invention as described later.

The copolymer A recovered from the fluorinated copolymer dispersion, an organic solvent, and, as the case requires, other components, may be mixed to form the water and oil repellent composition of the present invention as described later.

### (Production method 2)

This production method 2 may be a method in which, as in the above method 2, the fluorinated copolymer dispersion is diluted with an aqueous medium to adjust the solid content concentration, and, as the case requires, other components may be added to prepare a water and oil repellent composition as described later, and the fluorinated copolymer contained in the above fluorinated copolymer dispersion is recovered from the water and oil repellent composition, and then washed with water and a polar solvent.

The monomer component, the aqueous medium, the emulsifier, and the polymerization initiator, are, respectively, the same as in the production method 1. The proportion of the monomer a to the total number of moles of the monomer component, the proportion of the monomer b1 to the total number of moles of the monomer component, the proportion of the monomer b2 to the total mass of the monomer component, the proportion of the total of the monomer a and the monomer b1 to the total mass of the monomer component, etc., are also the same as in the production method 1.

At the time of polymerizing the monomer component, a molecular weight adjusting agent may be used. The molecular weight modifier may also be the same as in the production method 1.

In the production method 2, a method for preparing an emulsified liquid is not particularly limited. For example, it may be prepared by mixing a monomer component, an aqueous medium, an emulsifier, and a polymerization initiator to obtain a mixed liquid, emulsifying the mixed liquid, and adding a polymerization initiator. The emulsified liquid may be prepared by the same method as in the method of preparing the second mixed liquid in the production method 1.

The preferred concentration of the monomer component in the emulsified liquid and the preferred total amount of the emulsifier are, respectively, the same as in the second mixed liquid in the production method 1. The method for polymerizing the monomer component in the emulsified liquid and the preferred conversion rate of the monomer component to the copolymer A at the end of the polymerization are also the same as in the production method 1.

There is no particular limitation on the method of recovering the fluorinated copolymer from the fluorinated copolymer dispersion or from the water and oil repellent composition as described later, and a known method may be suitably employed. For example, as shown in Examples to be described later, a method may be mentioned in which a mixed solvent of hexane and tert-butanol is added to a fluorinated copolymer dispersion to precipitate a fluorinated copolymer, followed by solid-liquid separation. The proportion of hexane in the mixed solvent of hexane and tert-butanol is preferably from 10 to 90 mass%.

By washing the recovered fluorinated copolymer with water, a polar solvent, or a mixed solvent of water and a polar solvent, it is possible to remove a relatively highly polar molecule from the fluorinated copolymer to reduce W1/W2 and make the molecular weight to be high. The temperature of the water is preferably from 40 to 70°C.

The amount of water to be used is, for example, from 1 to 20 times by a mass ratio relative to the fluorinated copolymer.

As the polar solvent, a polar solvent having a relatively low boiling point in which the copolymer A does not dissolve or swell, is preferred in terms of workability. The boiling point of the polar solvent is preferably from 40 to 120°C, more preferably from 50 to 90°C, from the viewpoint of workability. Specific examples of the polar solvent may be tert-butanol and isopropyl alcohol. The temperature of the polar solvent is not particularly limited, but is, for example, from 10 to 50°C.

The amount of the polar solvent to be used is, for example, from 1 to 20 times by a mass ratio to the fluorinated copolymer.

In the case of a mixed solvent of water and a polar solvent, the mass ratio of the polar solvent to water (polar solvent/water) is preferably from 1/99 to 99/1, more preferably from 10/90 to 90/10, from the viewpoint of removability of the polar solvent.

In order to wash the fluorinated copolymer, for example, the fluorinated copolymer and warm water of from 40 to 70°C, or a polar solvent, may be mixed. The washing time is, for example, from 1 to 30 minutes.

### <Water and oil repellent composition>

The water and oil repellent composition of the present invention (hereinafter referred to also as the present composition) contains a copolymer A.

The present composition is preferably a fluorinated copolymer dispersion containing the copolymer A, an aqueous medium, and an emulsifier.

The present composition may contain other components as the case requires.

The present composition may be one prepared by diluting the fluorinated copolymer dispersion with an aqueous medium as described later to adjust a solid concentration, and adding other components as the case requires.

The present composition may be a fluorinated copolymer solution containing the copolymer A and an organic solvent and containing no emulsifier.

### (Aqueous medium)

As the aqueous medium, water, or a mixed medium of water and a water-soluble organic solvent may be mentioned.

As the water-soluble organic solvent, an alcohol (excluding an alcohol having an ether bond) or an alcohol having an ether bond, is preferred. The alcohol may, for example, be isopropyl alcohol, tert-butanol, propylene glycol, or hexylene glycol. The alcohol having an ether bond may, for example, be 3-methoxymethylbutanol, dipropylene glycol, dipropylene glycol monomethyl ether, or tripropylene glycol. As the water-soluble organic solvent, an alcohol having an ether bond is preferred from the viewpoint of improving compatibility between the copolymer A and an aqueous medium to facilitate formation of a uniform membrane on a substrate, and dipropylene glycol, tripropylene glycol, or dipropylene glycol monomethyl ether is more preferred.

In a case where the aqueous medium contains a water-soluble organic solvent, the content of the water-soluble organic solvent is preferably from 1 to 80 parts by mass, more preferably from 10 to 60 parts by mass, to 100 parts by mass of water.

### (Emulsifier)

An emulsifier is a surfactant having both hydrophilic and hydrophobic moieties.

The emulsifier may be an anionic emulsifier, a nonionic emulsifier, a cationic emulsifier, or an amphoteric emulsifier. As the emulsifier, one having no fluorine atom is preferred.

As the emulsifier, from the viewpoint of excellent dispersion stability of the present composition, a single use of a nonionic emulsifier, a combination of a nonionic emulsifier and a cationic emulsifier or an amphoteric emulsifier, or a single use of an anionic emulsifier is preferred, and a combination of a nonionic emulsifier and a cationic emulsifier is more preferred. The use of a nonionic emulsifier alone is also preferred from the viewpoint of control of W₁/W₂.

The ratio of the nonionic emulsifier to the cationic emulsifier (nonionic emulsifier/cationic emulsifier) is preferably from 100/0 to 40/60 (mass ratio), more preferably from 97/3 to 40/60 (mass ratio).

In a specific combination of a nonionic emulsifier and a cationic emulsifier, since the total amount of the emulsifier to 100 parts by mass of the copolymer A can be made to be at most 5 parts by mass, it is possible to reduce an adverse effect on the water and oil repellency of an article treated with the present composition, caused by the emulsifier.

Examples of nonionic emulsifiers may be surfactants s1 to s6 as described in paragraphs [0067] to [0095] of JP-A-2009-215370.

The surfactant s1 is a polyoxyalkylene monoalkyl ether, a polyoxyalkylene monoalkenyl ether, a polyoxyalkylene monoalka polyenyl ether, or a polyoxyalkylene monopolyfluoroalkyl ether. As the surfactant s1, a polyoxyethylene alkyl ether is preferred.

The surfactant s2 is a compound having 1 or more carbon-carbon triple bonds and 1 or more hydroxy groups in the molecule. As the surfactant s2, an acetylene glycol ethylene oxide adduct is preferred as a nonionic emulsifier.

The surfactant s3 is a compound in which a polyoxyethylene chain and a polyoxyalkylene chain having 2 or more of oxyalkylene with 3 or more carbon atoms are sequentially linked, and both ends are hydroxy groups. As the surfactant s3, an ethylene oxide propylene oxide polymer is preferred.

As the nonionic emulsifier, two or more types may be used in combination.

An example of the cationic emulsifier may be the surfactant s7 as described in Paragraphs [0096] to [0100] of JP-A-2009-215370.

The surfactant s7 is a cationic emulsifier in the form of a substituted ammonium salt.

As the surfactant s7, preferred is an ammonium salt in which at least one of hydrogen atoms bonded to a nitrogen atom is substituted by an alkyl group, an alkenyl group or a polyoxyalkylene chain having a hydroxy group at its terminal, and more preferred is a compound s71 represented by the following formula s71.

[(R²¹)₄N⁺]·X⁻ Formula s71.

R²¹ is a hydrogen atom, a C₁₋₂₂ alkyl group, a C₂₋₂₂ alkenyl group, a C₁₋₉ fluoroalkyl group, or a polyoxyalkylene chain having a hydroxy group at its terminal. The four R²¹'s may be the same or different, but the four R²¹'s are not hydrogen-atoms at the same time. X⁻ is a counterion.

As X⁻, a chloride ion, an ethyl sulfate ion, or an acetate ion is preferred.

The compound s71 may, for example, be monostearyltrimethylammonium chloride, monostearyldimethylmonoethylammonium ethyl sulfate, mono(stearyl) monomethyl di(polyethylene glycol) ammonium chloride, monofluorohexyltrimethylammonium chloride, di(beef tallow alkyl) dimethylammonium chloride, or dimethyl monococonut amine acetate.

As the cationic emulsifier, two or more types may be used in combination.

Examples of the amphoteric emulsifier may be surfactants s8 as described in paragraphs [0101] to [0102] of JP-A-2009-215370. Two or more of them may be used in combination. The surfactants s8 are alanine, imidazolinium betaine, amidobetaine or betaine acetate.

### (Organic solvent)

The organic solvent may be any solvent so long as it is capable of dissolving the copolymer A, and may, for example, be the above-mentioned water-soluble organic solvent, a ketone, a compound having an amide bond, a compound having an ether bond and having no hydroxy group, or an organic solvent having fluorine atoms. As the water-soluble organic solvent, the same compounds as described above may be exemplified. As the ketone, for example, acetone, methyl ethyl ketone, or methyl isobutyl ketone may be mentioned. As the compound having an amide bond, dimethylacetamide, 3-methoxy-dimethylpropanamide, 3-butoxydimethylpropanamide, or methylpyrrolidone may be mentioned. As the compound having an ether bond and having no hydroxy group, for example, tetrahydrofuran, dipropylene glycol dimethyl ether, triethylene glycol dimethyl ether, or tetraethylene glycol dimethyl ether may be mentioned. As the organic solvent having fluorine atoms, for example, 1,1,1,2,2,3,3,4,4,5,5,6,6-tridecafluorooctane, 1,1,2,2-tetrafluoroethyl-2,2,2-trifluoroethyl ether, 1-methoxy-1,1,2,2,3,3,3-heptafluoropropane, 1-methoxy-1,1,2,2,3,3,4,4,4-nonafluorobutane, 1-ethoxy-1,1,2,2,3,3,4,4,4-nonafluorobutane, 1,1,1,2,2,3,4,5,5,5-1 decafluoro-3-methoxy-4-trifluoromethylpentane, 1,1,1,2,2,3,4,5,5,5-decafluoropentane, poly(1,1,2,3,3,3-hexafluoropropeneoxide), 1,3-bistrifluoromethylbenzene, 1,4-trifluoromethylbenzene, trifluorotoluene, perflurobenzene and perfluorobutylamine may be mentioned.

### (Other components)

Other components may, for example, be a fluorinated polymer other than the copolymer A, a non-fluorinated polymer, a non-fluorinated water and oil repellent agent, a water-soluble polymer resin (e.g. a hydrophilic polyester and its derivative, a hydrophilic polyethylene glycol and its derivative), a crosslinking agent, a penetrating agent (e.g. a nonionic surfactant having an acetylene group in the center and having a symmetrical structure, a Dispanol (product name) series manufactured by NOF Corporation), a colloidal silica (e.g. a Snowtex (product name) series manufactured by Nissan Chemical Corporation, an Adelite series manufactured by ADEKA Corporation), an antifoaming agent (e.g. an Olfine (product name) series manufactured by Nissin Chemical Industry Co., Ltd.), a FS anti-foam series manufactured by Toray Dow Corning Co., Ltd.), a film forming aid, an insecticide, a flame retardant, an antistatic agent (e.g. a Delectol series manufactured by Meisei Chemical Works, Ltd.), a wrinkle inhibitor, a pH adjusting agent (e.g. diethanolamine, triethanolamine, acetic acid, and citric acid).

When the present composition contains a crosslinking agent, adhesion to a base material is likely to be improved. As the crosslinking agent, an isocyanate-type crosslinking agent, a methylol-type crosslinking agent, a carbodiimide-type crosslinking agent, and an oxazoline-type crosslinking agent are preferred.

The isocyanate-type crosslinking agent may, for example, be an aromatic block type isocyanate-type crosslinking agent, an aliphatic block type isocyanate-type crosslinking agent, an aromatic non-block type isocyanate-type crosslinking agent, or an aliphatic non-block type isocyanate-type crosslinking agent. The isocyanate-type crosslinking agent is preferably a water dispersion type emulsified by a surfactant, or a self-water dispersion type having a hydrophilic group.

The methylol-type crosslinking agent may, for example, be a condensate or precondensate of urea or melamine and formaldehyde, a methylol-dihydroxyethylene-urea or a derivative thereof, a methylol-ethylene-urea, a methylol-propylene-urea, a methylol-triazone, a condensate of dicyandiamide-formaldehyde, a methylol-carbamate, a methylol-(meth)acrylamide, or a polymer thereof.

The carbodiimide-type crosslinking agent is a polymer having a carbodiimide group in its molecule, and is a crosslinking agent which exhibits excellent reactivity with a carboxy group, an amino group, or an active hydrogen group of a base material, etc.

The oxazoline-type crosslinking agent is a polymer having an oxazoline group in its molecule, and is a crosslinking agent exhibiting excellent reactivity with a carboxy group of a base material, etc.

Other crosslinking agents may, for example, be divinylsulfones, polyamides or cationic derivatives thereof, polyamines or cationic derivatives thereof, epoxy derivatives such as diglycidylglycerol, halide derivatives such as (epoxy-2,3-propyl)trimethylammonium chloride, N-methyl-N-(epoxy-2,3-propyl)morpholinium chloride, pyridinium salts of chloromethyl ethers of ethylene glycol, polyamine-polyamido-epichlorohydrin resins, polyvinyl alcohol or derivatives thereof, polyacrylamide or derivatives thereof, glyoxal resin-type wrinkle inhibitors.

In a case where the present composition contains a methylol-type crosslinking agent or a glyoxal resin-type wrinkle inhibitor, it is preferred to contain a catalyst as an additive. A preferred catalyst may, for example, be an inorganic amine salt or an organic amine salt. The inorganic amine salt may, for example, be ammonium chloride. The organic amine salt may, for example, be an amino alcohol hydrochloride or semicarbazide hydrochloride. The amino alcohol hydrochloride salt may, for example, be monoethanolamine hydrochloride, diethanolamine hydrochloride, triethanol hydrochloride, or 2-amino-2-methylpropanol hydrochloride.

### (Proportions of the respective components)

The solid content concentration of the present composition is preferably from 25 to 70 mass%, more preferably from 30 to 60 mass%, in the fluorinated copolymer dispersion immediately after production of the present composition.

The total amount of the emulsifier in the present composition is preferably from 1 to 6 parts by mass per 100 parts by mass of the copolymer A in the fluorinated copolymer dispersion immediately after production of the present composition.

The solid content concentration of the present composition is preferably from 0.1 to 10 mass%, more preferably from 0.2 to 7 mass%, when used in the treatment of the base material. The concentration of the crosslinking agent in the present composition is preferably from 0.1 to 3 mass%, when used in the treatment of the base material.

In the present composition as described above, since the copolymer A has monomer a units, the water and oil repellency of an article treated with the present composition will be excellent. The article treated with the present composition has, for example, a contact angle of water measured according to JIS R3257:1999 "Test Methods for Wettability of Substrate Glass Surfaces", as exemplified by Examples as described later, being at least 100 degrees, preferably from 102 to 115 degrees. In this case, it is shown that the water repellency is good even after friction.

And, in the present composition, since the proportion of the monomer a units to all units constituting the copolymer A is within a specific range, the water and oil repellency of an article treated with the present composition will be excellent, and when the present composition is an aqueous dispersion, the dispersion stability of the copolymer A will also be excellent. Further, since W₁/W₂ is within a specific range, the water and oil repellency of an article treated with the composition containing the copolymer A will be more excellent. Further, since Mw of the copolymer A is high, it is also excellent in the friction durability of the water and oil repellency of the article treated with the present composition.

### <Article>

The article of the present invention is an article treated with the present composition.

The article to be treated with the present composition may, for example, be fibers, fiber woven fabrics, fiber knitted fabrics, nonwoven fabrics, glass, paper, wood, leather, artificial leather, stone, concrete, ceramics, metals, metal oxides, ceramic products, resin molded articles, porous resins, or porous fibers. The porous resin may be used, for example, as a filter. The material for the porous resin may, for example, be polyethylene, polypropylene, polyethylene terephthalate, or polytetrafluoroethylene. The material for the porous fiber may, for example, be glass fibers, cellulose nanofibers, carbon fibers, or cellulose acetate.

The treatment method may, for example, be a method of applying or impregnating the present composition to an article by a known coating method, followed by drying.

In the article of the present invention as described above, since the article is treated by using the present composition containing the copolymer A having monomer a units, the water and oil repellency will be excellent.

And, in the present article, since the proportion of the monomer a units to all units constituting the copolymer A is within a specific range, and since W₁/W₂ of the copolymer A is within a specific range, the water and oil repellency will be excellent. Further, since Mw of the copolymer A is high, the friction durability of the water and oil repellency will also be excellent. Therefore, it is possible to sufficiently maintain the excellent water and oil repellency before friction even after the article is rubbed.

### EXAMPLES

Hereinafter, the present invention will be described in detail by way of Examples, but the present invention is not limited thereto. Here, Ex. 2 to 4, 6, and 10 are Examples of the present invention, and Ex. 1, 5, and 7 to 9 are Comparative Examples.

### (Appearance)

The appearance of the fluorinated copolymer dispersion after polymerization was visually confirmed. One where the appearance was uniform (no residue or no layer separation was observed), was rated to be ○ (good), and otherwise, the state of appearance was described in Table.

### (Conversion rate)

A value obtained by fitting a theoretical value of the solid concentration of a dispersion or solution of a fluorinated copolymer calculated from the charged amounts of raw materials, and an actual measurement value of the solid concentration of a dispersion or solution of a fluorinated copolymer, to the formula of the actual measurement value/theoretical value × 100, was taken as the conversion ratio of a monomer component to a fluorinated copolymer. A case where the conversion ratio is at least 90% was rated to be O (good), a case where it is at least 80% and less than 90% was rated to be Δ (acceptable), and a case where it is less than 80%, was rated to be × (not acceptable).

### (Mn, Mw and Mw/Mn)

From a dispersion or solution of a fluorinated copolymer, the fluorinated copolymer was recovered as follows. 6 g of the dispersion or solution of the fluorinated copolymer was dropwise added to 60 g of isopropyl alcohol (hereinafter referred to as IPA) and stirred to precipitate a solid. After centrifugation at 3,000 rpm for 5 minutes, the solid was separated. Again 12 g of IPA was added and stirred well. After centrifugation at 3,000 rpm for 5 minutes, the solid was separated from the supernatant liquid and dried under vacuum overnight at 35°C to obtain a fluorinated copolymer.

The recovered fluorinated copolymer was dissolved in a mixed solvent of HCFC225 (AK-225, product name of AGC Inc. (hereinafter referred to as AK-225))/tetrahydrofuran (hereinafter referred to as THF) = 6/4 (volume ratio), to obtain a solution having a solid content concentration of 0.5 mass%, and the solution was passed through a 0.2 µm filter to obtain an analytical sample. With respect to the analytical sample, Mn, Mw and Mw/Mn were measured by GPC-measurement. The measurement conditions are as follows.
Apparatus: HLC-8320GPC, manufactured by Tosoh Corporation,
Column: MIXED-C, manufactured by Polymer laboratories, 300 × 7.5 mm, 5 µm,
Mobile phase: mixed solvents of AK-225/THF = 6/4 (volume ratio),
Flow rate: 1.0 mL/min, oven temperature: 37°C, sample concentration: 1.0 mass%,
Injection amount: 50 µL, detector: RI (refractive index detector),
Molecular weight standards: polymethylmethacrylate (Mw=2,136,000, 955,000, 569,000, 332,800, 121,600, 67,400, 31,110, 13,300, 7,360, 1,950, 1,010, and 550).

### (W₁/W₂)

The fluorinated copolymer was dissolved in a mixed solvent of AK-225/THF = 5/5 (volume ratio) to obtain a solution having a solid content concentration of 1 mass%, which was passed through a 0.45 µm filter to obtain an analytical sample. With respect to the analytical sample, HPLC measurement was conducted. The measurement conditions are as follows. From the measurement results, the half-width W₁ and the width W₂ were obtained, and W₁/W₂ was calculated.
Apparatus: HP1100, manufactured by Agilent,
Column: One having a silica gel with a propyl group having a pentafluorophenyl group as a stationary phase (phenomenex Luna PFP, product name of Shimadzu GLC Ltd., 2 mm in inside diameter × 150 mm in length × 3 µm in particle diameter),
Mobile phase: Liquid A: Methanol, Liquid B: AK-225/THF = 5/5 (volume ratio),
Gradient conditions: 0 - 95 (5 - 20 min) - 95 (30 min) - 95 - 00 (30 - 40 min) -00 (45 min), in volume% of liquid B,
Flow rate: 0.3 mL/min, oven temperature: 40°C, sample concentration: 1 mass% (in liquid B),
Injection amount: 10 µL, detector: ELSD (evaporative emission scattering detector).

Details of the gradient conditions as described above are as follows.

(1) At the start, flowing was conducted for 5 minutes at a liquid A ratio of 100 vol% (liquid B ratio of 0 vol%), (2) from 5 minutes after the start, the liquid B ratio was raised, and over 15 minutes from 5 minutes after the start to 20 minutes, the liquid B ratio was raised to 95 vol%, (3) from 20 minutes after the start, the liquid B ratio was fixed at 95 vol% and flowing was conducted as it was for 10 minutes, (4) from 30 minutes after the start, the liquid B ratio was lowered, and over 10 minutes from 30 minutes to 40 minutes after the start, the liquid B ratio was lowered to 0 vol% (liquid A ratio of 100 vol%), and (5) from 40 minutes after the start, flowing was conducted at the liquid A ratio of 100% for 5 minutes.

### (Contact angle of water)

In accordance with JIS R3257: 1999 "Test Method for Wettability of Substrate Glass Surface", water droplets were left to stand at five positions on the surface of an article, and with respect to each droplet, the contact angle of water was measured by a sessile drop method. The water droplets were about 2 µL/drop, and the measurements were carried out at 23°C. The contact angle of water is represented by the average of the measured values at the five positions. The contact angle of water serves as an index for the water repellency of the article. When the average value of the contact angle of water is at least 100 degrees, water repellency is good. When the average value of the contact angle of water after carrying out the friction test as described later is at least 100 degrees, the friction durability of the water repellency is good.

### (Contact angle of IPA80%)

In accordance with JIS R3257: 1999 "Test Method for Wettability of Substrate Glass Surface", droplets of a 80 mass% isopropyl alcohol aqueous solution were left to stand at 5 positions on the surface of an article, and with respect to each droplet, the contact angle of a 80 mass% isopropyl alcohol aqueous solution was measured by a sessile drop method. The droplets were about 2 µL/drop, and the measurements were carried out at 23°C. The contact angle of a 80 mass% isopropyl alcohol aqueous solution is represented by an average value of measured values at the 5 positions. The contact angle of a 80 mass% isopropyl alcohol aqueous solution serves as an index for water repellency and alcohol repellency of the article. When the average value of the contact angle of a 80 mass% isopropyl alcohol aqueous solution is at least 50 degrees, water repellency and alcohol repellency are good. When the average value of the contact angle of a 80 mass% isopropyl alcohol aqueous solution after carrying out the friction test as described later, is at least 40 degrees, it indicates that the water repellency and the alcohol repellency are good even after the friction.

### (Contact angle of n-hexadecane)

In accordance with JIS R3257: 1999 "Test Method for Wettability of Substrate Glass Surface", droplets of n-hexadecane were left to stand at 5 positions on the surface of an article, and with respect to each droplet, the contact angle of n-hexadecane was measured by a sessile drop method. The droplets were about 2 µL/drop, and the measurements were carried out at 23°C. The contact angle of n-hexadecane is represented by an average value of measured values at the five positions. The contact angle of n-hexadecane serves as an index for oil repellency of the article. When the average value of the contact angle of n-hexadecane is at least 60 degrees, oil repellency is good. When the average value of the contact angle of n-hexadecane after carrying out the friction test as described later, is at least 50 degrees, it indicates that the oil repellency is good even after the friction.

### (Friction test)

The surface of an article prepared in accordance with JIS R3257: 1999 "Test Method for Wettability of Substrate Glass Surface", was subjected to reciprocal friction for 10 times by using an Etiquette brush (product number: H51 one-push rotating function, material: 100% pile nylon) manufactured by Nippon Seal Co., Ltd. If the contact angle of water before the friction test is more than 100 degrees, and the contact angle of water after the friction test is more than 100 degrees, the friction durability is good.
(Monomer a): C6OLF: CH₂=CH-CF₂CF₂CF₂CF₂CF₂CF₃
(Monomer b): VAC: vinyl acetate

### (Media)

Water: Ion-exchanged water.
DPG: dipropylene glycol.
MIBK: Methyl isobutyl ketone.

### (Emulsifiers)

E430: Polyoxyethylene oleyl ether (about 30 molar adduct of ethylene oxide, product name of Kao Corporation: Emulgen 430).
P204: Ethylene oxide-propylene oxide polymer (Oxyethylene group content: 40 mass%, product name of NOF Corporation: Plonon #204,

   HO-(C₂H₄O)₁₅-(C₃H₆O)₃₀-(C₂H₄O)₁₅-H)).
AQ18: 63 mass% water and isopropyl alcohol solution of monostearyltrimethylammonium chloride (product name of LION SPECIALTY CHEMICALS CO., LTD. Lipoquad 18-63)

### (Polymerization initiators)

VA-061A: One obtained by mixing 2,2'-azobis[2-(2-imidazolin-2-yl)propane] (manufactured by Wako Pure Chemical Industries, Ltd., VA-061) and a 80 mass% acetic acid aqueous solution in a mass ratio of 1:1.
Perbutyl PV: tert-butyl peroxypivalate (manufactured by NOF Corporation).

### (Ex. 1)

Into a 0.5 L autoclave with a stirring device, monomers, a medium and an emulsifier of the types and the charged amounts as shown in Table 1 were put and stirred to obtain a first mixed liquid. The first mixture was charged into a homogenizer and dispersed by shearing at 18,000 revolutions per minute for 5 minutes to obtain an emulsified liquid. To this emulsified liquid, a polymerization initiator of the type and the charged amount as shown in Table 1 was added to obtain a second mixed liquid. The inside of the autoclave was nitrogen-substituted, and the temperature was raised to 45°C, and the monomer component was polymerized in the second mixed liquid for 24 hours to obtain a fluorinated copolymer dispersion. The appearance of the fluorinated copolymer dispersion, conversion rate, Mw of the fluorinated copolymer, and W₁/W₂ of the fluorinated copolymer, are shown in Table 1. The same applies to the following Ex.

The fluorinated copolymer dispersion was diluted with ion-exchanged water to adjust the solid content concentration to be 10 mass% to obtain a water and oil repellent composition.

The water and oil repellent composition was applied to the surface of a glass substrate previously degreased with acetone and dried at 200°C for 10 minutes to obtain an article for evaluation. As the glass substrate, ASLAB, SUPER GRADE MICROSCOPE SLIDES (product name of THICK Co., vertical: 25 mm, horizontal: 75 mm, thickness: 1.0 to 1.2 mm) was used, and for the coating on the surface of the glass substrate, a dip coater (device name: F255, 3 reciprocations at a velocity of 0.5 mm/sec) was used.

With respect to the article, the contact angles of the above mentioned respective droplets were measured. The measurement results are shown in Table 1 as initial liquid repellency. Then, the article was subjected to the friction test in accordance with the above mentioned method, and thereafter, the contact angles of the above mentioned respective droplets were measured. The measurement results are shown in Table 1 as liquid repellency after friction. Also with respect to the following Ex., the measurement results are likewise shown in Table 1 or Table 2.

### (Ex. 2 and Ex. 5 to Ex. 8)

A first mixed liquid was obtained and an emulsified liquid was obtained in the same manner as in Ex. 1, except that the monomers, the medium and the emulsifier of the types and the charged amounts as shown in Table 1 and Table 2 were used. A fluorinated copolymer dispersion was obtained in the same manner as in Ex. 1, except that the monomers and the polymerization initiator of the types and the charged amounts as shown in Table 1 and Table 2 were added to the emulsified liquid.

An article was obtained in the same manner as in Ex. 1, except that the fluorinated copolymer dispersion was changed to one obtained in each Ex. With respect to such an article, the liquid repellency at initial stage and the liquid repellency after friction were measured in the same manner as described above.

### (Ex. 3 and Ex. 4)

An emulsified liquid was obtained in the same manner as in Ex. 1, except that monomers, a medium and an emulsifier of the types and the charged amounts as shown in Table 1 were used, and the obtained mixed liquid was charged into a high pressure emulsifier (device name: LAB60) and forcibly emulsified and dispersed at an 40 MPa pressure. A fluorinated copolymer dispersion was obtained in the same manner as in Ex. 1, except that the monomers and the polymerization initiator of the types and the charged amounts as shown in the column for "charged amounts after emulsification" in Table 1 were added to the emulsified liquid. An article was obtained in the same manner as in Ex. 1, except that the fluorinated copolymer dispersion was changed to one obtained in each Ex. With respect to such an article, the liquid repellency at initial stage and the liquid repellency after friction were measured in the same manner as described above.

### (Ex. 9)

Into a 0.5 L autoclave with a stirring device, monomers, a medium and a polymerization initiator of the types and charged amounts as shown in Table 2 were added. The inside of the autoclave was nitrogen-substituted, the temperature was raised to 45°C, and the monomer component was polymerized for 24 hours to obtain a fluorinated copolymer solution. The fluorinated copolymer solution was diluted with MIBK, and the solid concentration was adjusted to be 10 mass% to obtain a water and oil repellent composition. It was applied to the surface of a glass substrate in the same manner as in Ex. 1 and dried to obtain an article for evaluation. With respect to the article, the liquid repellency at initial state and the liquid repellency after friction were measured in the same manner as described above.

### (Ex. 10)

1 g of the fluorinated copolymer dispersion obtained in Ex. 1 was mixed with 1 g of hexane and 9 g of tert-butanol to precipitate a solid, followed by centrifugation at 3,000 rpm for 5 minutes, and then the solid was separated. The obtained solid was washed with warm water (50°C) in an amount of 10 times for 10 minutes, followed by centrifugation at 3,000 rpm for 5 minutes, and then the solid was separated. The separated solid was washed with IPA (25°C) in an amount of 10 times for 10 minutes, followed by centrifugation at 3,000 rpm for 5 minutes, and then the solid was separated to obtain a fluorinated copolymer. The fluorinated copolymer was dissolved in a mixed solvent of AK-225/THF = 5/5 (volume ratio) to obtain a fluorinated copolymer solution having a solid content concentration of 10 mass%. An article was obtained in the same manner as in Ex. 1, except that the fluorinated copolymer dispersion was changed to the fluorinated copolymer solution. With respect to the article, the liquid repellency at initial state and the liquid repellency after friction were measured in the same manner as described above.

**[Table 1]**

| | | | Ex. 1 | Ex. 2 | Ex. 3 | Ex. 4 | Ex. 5 |
|---|---|---|---|---|---|---|---|
| Charged amount before emulsification [parts by mass] | Monomer a | C60LF | 66 | 23 | 26 | 27.5 | 53 |
| | Monomer b | VAC | 34 | 34 | 34 | 27.5 | 34 |
| | Emulsifier | E430 | 1 | 1 | 1.5 | 1.5 | 1 |
| | | P204 | 0.5 | 0.5 | 0.75 | 0.75 | 0.5 |
| | | AQ18 | 0.25 | 0.25 | 0.375 | 0.375 | 0.25 |
| | Aqueous medium | DPG | 17.5 | 17.5 | 17.5 | 17.5 | 17.5 |
| | | Water | 85 | 85 | 85 | 85 | 85 |
| Emulsification method | | | 1 | 1 | 2 | 2 | 1 |
| Charged amount after emulsification [parts by mass] | Monomer a | C60LF | - | 43 | 40 | 40 | 13 |
| | Monomer b | VAC | - | - | - | - | - |
| | Initiator | VA061 | 1 | 1 | 1 | 1 | 1 |
| | | Perbutyl PV | - | - | - | - | - |
| | MIBK | | - | - | - | - | - |
| Monomer a | | Molar ratio (%) | 33 | 33 | 33 | 40 | 33 |
| | | Post-addition ratio (%) | 0 | 65 | 61 | 59 | 20 |
| After polymerization | | Appearance | ○ | ○ | ○ | ○ | ○ |
| | | Conversion rate (%) | ○ | ○ | ○ | ○ | ○ |
| | | Mn | 13000 | 12000 | 12500 | 11500 | 13000 |
| | | Mw | 23000 | 25000 | 26000 | 26000 | 24000 |
| | | Mw/Mn | 1.8 | 2.1 | 2.1 | 2.3 | 1.8 |
| HPLC measurement | | W₁ | 2.93 | 2.34 | 2.53 | 2.43 | 2.84 |
| | | W₂ | 4.88 | 4.98 | 5.16 | 5.40 | 4.90 |
| | | W₁/W₂ | 0.60 | 0.47 | 0.49 | 0.45 | 0.58 |
| Liquid repellency (degrees) | Initial stage | Water | 104 | 108 | 107 | 110 | 104 |
| | | IPA 80% | 42 | 54 | 56 | 58 | 43 |
| | | n-hexadecane | 58 | 62 | 63 | 64 | 59 |
| | After friction | Water | 101 | 105 | 104 | 105 | 102 |
| | | IPA 80% | 39 | 49 | 50 | 52 | 39 |
| | | n-hexadecane | 48 | 56 | 57 | 59 | 49 |

**[Table 2]**

| | | | Ex. 6 | Ex. 7 | Ex. 8 | Ex. 9 | Ex. 10 |
|---|---|---|---|---|---|---|---|
| Charged amount before emulsification [parts by mass] | Monomer a | C60LF | 33 | 13 | 66 | Solution polymerization | The fluorinated copolymer in Ex. 1 was washed with water and a polar solvent. |
| | Monomer b | VAC | 34 | 34 | 17 | | |
| | Emulsifier | E430 | 1 | 1 | 2 | | |
| | | P204 | 0.5 | 0.5 | 1 | | |
| | | AQ18 | 0.25 | 0.25 | 0.5 | | |
| | Aqueous medium | DPG | 17.5 | 17.5 | 17.5 | | |
| | | Water | 85 | 85 | 85 | | |
| Emulsification method | | | 1 | 1 | 1 | | |
| Charged amount after emulsification [parts by mass] | Monomer a | C60LF | 33 | 53 | - | 72.5 | |
| | Monomer b | VAC | - | - | 17 | 27.5 | |
| | Initiator | VA061 | 1 | 1 | 1 | - | |
| | | Perbutyl PV | - | - | - | 4 | |
| | MIBK | | - | - | - | 100 | |
| Monomer a | | Molar ratio (%) | 33 | 33 | 33 | 40 | |
| | | Post-addition ratio (%) | 50 | 80 | 0 | - | |
| After polymerization | | Appearance | ○ | Large amount of residue | ○ | Two layer separation | - |
| | | Conversion rate (%) | ○ | Δ | ○ | × | - |
| | | Mn | 12000 | 10000 | 11500 | 7000 | 15500 |
| | | Mw | 23000 | 18000 | 21000 | 11000 | 26000 |
| | | Mw/Mn | 1.9 | 1.8 | 1.8 | 1.6 | 1.7 |
| HPLC measurement | | W₁ | 2.41 | 2.61 | 2.65 | 2.21 | 2.93 |
| | | W₂ | 5.02 | 5.02 | 4.49 | 5.67 | 5.86 |
| | | W₁/W₂ | 0.48 | 0.52 | 0.59 | 0.39 | 0.50 |
| Liquid repellency (degrees) | Initial stage | Water | 107 | 102 | 102 | 112 | 110 |
| | | IPA 80% | 53 | 53 | 44 | 58 | 53 |
| | | n-hexadecane | 61 | 60 | 57 | 65 | 61 |
| | After friction | Water | 104 | 97 | 100 | 91 | 102 |
| | | IPA 80% | 48 | 38 | 39 | 37 | 47 |
| | | n-hexadecane | 55 | 47 | 49 | 44 | 55 |

In Tables 1 and 2, the molar ratio (%) of monomer a indicates the proportion (mol%) of monomer a to the total number of moles of the monomer component. The post-addition ratio (%) of monomer a indicates the proportion of the charged amount after emulsification to the sum (total mass of monomer a) of the charged amount before emulsification and the charged amount after emulsification.

Emulsification method 1 indicates that dispersion was conducted by applying shearing at 18,000 revolutions per minute for 5 minutes by using a homogenizer. Emulsification method 2 indicates that dispersion was conducted by forced emulsification at a pressure of 40 MPa by using a high pressure emulsifier.

The articles in Ex. 2 to 4, 6 and 10 treated with compositions containing fluorinated copolymers in which the proportion of monomer a units was from 20 to 50 mol% to the total number of moles of monomer units, Mw was from 20,000 to 100,000, and W₁/W₂ was from 0.35 to 0.55, were excellent in water-and-oil-repellency at initial stage and in water and oil repellency after the frictional test.

The articles in Ex. 1, 5 and 8 treated with compositions containing fluorinated copolymers in which W₁/W₂ was more than 0.55, were poor in the water and oil repellency at initial stage.

The articles in Ex. 7 and 9 treated with compositions containing fluorinated copolymers in which Mw was less than 20,000, were poor in the water and oil repellency after the friction test.

From the comparison of Ex. 1, 2, 3, 4, 6, and 7, it was confirmed that by post-adding a part of the monomer a to the emulsion to carry out emulsion polymerization, the value of W₁/W₂ was reduced. Further, it was confirmed that when the proportion of the monomer a to be post-added, was from 30 to 70 mass% to the total mass of the monomer a, a fluorinated copolymer having a Mw of from 20,000 to 100,000 and a W₁/W₂ of from 0.35 to 0.55 was easily obtained, the appearance of the fluorinated copolymer dispersion system after the polymerization was excellent, and the polymerization conversion rate could be made high.

From the comparison of Ex. 1 to 9, it was confirmed that, when emulsion polymerization was used as a polymerization method, the appearance after polymerization was superior, the polymerization conversion rate could be made high, and the fluorinated copolymer having a high Mw was easily obtainable, as compared with the case where solution polymerization was used.

From the comparison between Ex. 1 and 10, it was confirmed that by washing the fluorinated copolymer with warm water and a polar solvent, the value of W₁/W₂ was reduced.

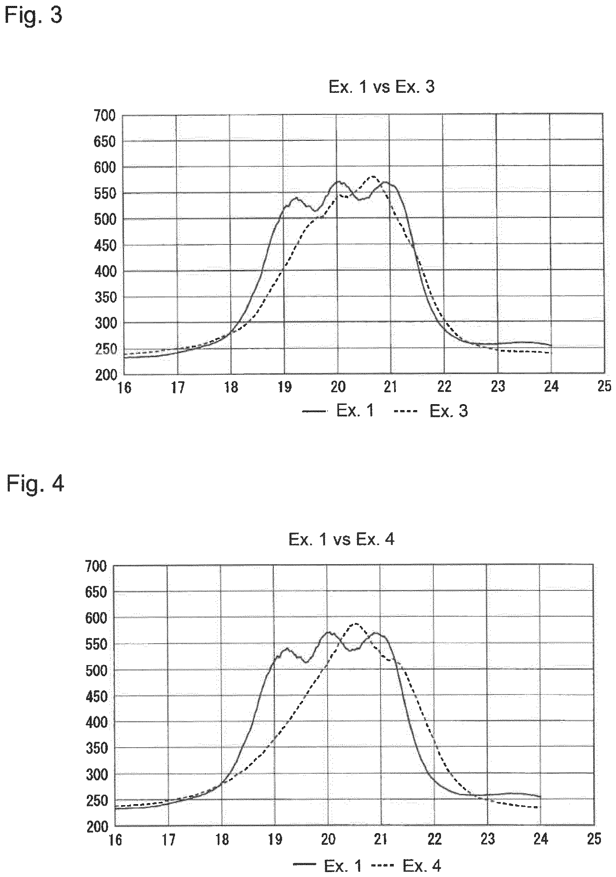

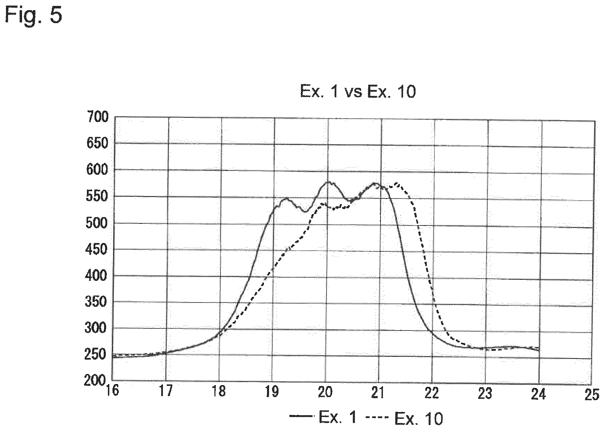

In Fig. 2, the chromatograms obtained by measuring HPLC of the fluorinated copolymers of Ex. 1 and Ex. 2 are shown in a superimposed manner. In Fig. 3, the chromatograms obtained by measuring HPLC of the fluorinated copolymers of Ex. 1 and Ex. 3 are shown in a superimposed manner. In Fig. 4, the chromatograms obtained by measuring HPLC of the fluorinated copolymers of Ex. 1 and Ex. 4 are shown in a superimposed manner. In Fig. 5, the chromatograms obtained by measuring HPLC of the fluorinated copolymers of Ex. 1 and Ex. 10 are shown in a superimposed manner.

From Figs. 2 to 5, it was confirmed that, in each of Ex. 2 to 4 in which a part of monomer a was post-added in the emulsion to carry out emulsion polymerization, and Ex. 10 in which the fluorinated copolymer was washed with warm water and a polar solvent, as compared with Ex. 1, a component having a relatively short retention time, i.e. a component having a relatively high polarity which is easily eluted with the liquid A, tended to decrease.

### INDUSTRIAL APPLICABILITY

The fluorinated copolymer of the present invention and the composition containing it, are useful as a water and oil repellent composition, a mold release agent, a release agent, etc.

The entire disclosure of Japanese Patent Application No. 2019-033222 filed on February 26, 2019 including specification, claims, drawings and summary is incorporated herein by reference in its entirety.

## Claims

1. A fluorinated copolymer comprising units based on the following monomer a and units based on the following monomer b, wherein
the proportion of the units based on the monomer a is from 20 to 50 mol% based on the total number of moles of units constituting the fluorinated copolymer,
the mass average molecular weight is from 20,000 to 100,000, and
the ratio of the half width of the peak of said fluorinated copolymer to the peak width in a chromatogram obtainable by high performance liquid chromatography measurement is from 0.35 to 0.55:
Monomer a: a compound represented by the following formula 1,
CH₂=CH-R^{f} Formula 1
where R^{f} is a C₁₋₈ perfluoroalkyl group;
Monomer b: a monomer copolymerizable with said monomer a.

2. The fluorinated copolymer according to Claim 1, wherein R^{f} in the monomer a is a C₄₋₆ perfluoroalkyl group.

3. The fluorinated copolymer according to Claim 1 or 2, wherein the monomer a is CH₂=CH-CF₂CF₂CF₂CF₃ or CH₂=CH-CF₂CF₂CF₂CF₂CF₂CF₃.

4. The fluorinated copolymer according to any one of Claims 1 to 3, wherein the proportion of the units based on the monomer b is from 50 to 80 mol% based on the total number of moles of units constituting the fluorinated copolymer.

5. The fluorinated copolymer according to any one of Claims 1 to 4, wherein the units based on the monomer b include units based on the following monomer b1:
Monomer b1: a compound represented by the following formula 2:
CH₂=CH-O-C(=O)-R Formula 2
where R is a C₁₋₄ alkyl group.

6. The fluorinated copolymer according to Claim 5, wherein R in the monomer b1 is a methyl group.

7. The fluorinated copolymer according to any one of Claims 1 to 6, wherein the molecular weight distribution (Mw/Mn) is from 1.0 to 4.5.

8. A method for producing a fluorinated copolymer, which comprises emulsifying a first monomer component containing the following monomer a and the following monomer b, and a first mixed liquid containing an aqueous medium and an emulsifier, to obtain an emulsified liquid, adding to the emulsified liquid, a second monomer component containing the monomer a, and a polymerization initiator, to obtain a second mixed liquid, and polymerizing in the second mixed liquid, the first monomer component and the second monomer component, wherein
the proportion of the monomer a contained in the first monomer component is from 30 to 70 mass% based on the total of the monomer a contained in the first monomer component and the monomer a contained in the second monomer component:
Monomer a: a compound represented by the following formula 1,
CH₂=CH-R^{f} Formula 1
where R^{f} is a C₁₋₈ perfluoroalkyl group;
Monomer b: a monomer copolymerizable with said monomer a, other than said monomer a.

9. The method for producing a fluorinated copolymer according to Claim 8, wherein the proportion of the monomer components in the second mixed liquid (the total content of the first monomer component and the second monomer component) is from 10 to 70 mass%.

10. The method for producing a fluorinated copolymer according to Claim 8 or 9, wherein the first mixed liquid is subjected to shearing or emulsified under high pressure conditions.

11. The method for producing a fluorinated copolymer according to any one of Claims 8 to 10, wherein the fluorinated copolymer is the fluorinated copolymer as defined in any one of Claims 1 to 7.

12. A method for producing a fluorinated copolymer as defined in any one of Claims 1 to 7, which comprises polymerizing, in an emulsified liquid containing a monomer component composed of the monomer a and the monomer b, an aqueous medium, an emulsifier and a polymerization initiator, the monomer component, to obtain a fluorinated copolymer dispersion, recovering the fluorinated copolymer from the fluorinated copolymer dispersion, and washing the fluorinated copolymer with water or a polar solvent.

13. A water and oil repellent composition containing the fluorinated copolymer as defined in any one of Claims 1 to 7.

14. An article treated by using the water and oil repellent composition as defined in Claim 13.

15. The article according to Claim 14, wherein the contact angle of water at the surface of the article after a friction test is more than 100 degrees.
